# EUROPEAN PATENT SPECIFICATION

(11) **EP 3 218 451 B1**
(45) Date of publication and mention of the grant of the patent: **01.01.2020**
(21) Application number: 14905886.9
(22) Date of filing: 14.11.2014
(51) Int. Cl.: B60K 15/04, B60K 15/03, C10L 1/10, C10L 1/02, C10L 1/18, C10L 1/185, F02M 21/02, F02M 25/00, F02M 37/22, B67D 7/04, B67D 7/74, B01F 15/02, B01F 15/04, B01F 3/08

(54) **CARTRIDGE FOR MIXING DME FUEL WITH ADDITIVES**
KARTUSCHE ZUM MISCHEN VON DME-KRAFTSTOFF MIT ADDITIVEN
CARTOUCHE POUR LE MÉLANGE DE CARBURANT DME AVEC DES ADDITIFS

(43) Date of publication of application: 20.09.2017
(73) Proprietor: Volvo Truck Corporation, 405 08 Göteborg (SE)
(72) Inventor: TASIK, Karl, Hagerstown, Maryland 21740 (US); ATHEY, Allison, 27282 Jamestown, NC (US)
(74) Representative: Kransell & Wennborg KB
(86) International application number: PCT/US2014/065679
(87) International publication number: WO 2016/076885

(56) References cited:
- US-A- 5 456 217
- US-A- 5 507 942
- US-A- 5 803 024
- US-A1- 2005 217 751
- US-A1- 2012 247 002
- US-A1- 2013 014 853
- US-A1- 2014 209 203
- US-B1- 6 321 692
- US-B1- 6 835 218
- US-B2- 6 827 750
- US-B2- 6 860 241
- US-B2- 7 648 792

## Description

### Technical Field

This disclosure relates to a device and method for providing fuel additives to a fuel system. Particularly, this disclosure relates to the use of removable cartridges to mix fuel additives into a vehicle's dimethyl-ether fuel system.

### Background and Summary

Use of alternative fuels for vehicles to replace gasoline and diesel is increasing in the market place. Alternative fuels include compressed natural gas (CNG), liquefied natural gas (LNG), and dimethyl-ether (DME). DME is a manufactured, rather than naturally occurring, alternative fuel. It is a colorless, odorless, and tasteless compound that can be produced from natural gas, or from CO₂-neutral biomass. It is believed to be non-toxic and non-carcinogenic. DME's molecular formula is CH₃OCH₃, and it behaves similarly to propane. Since the structure of DME lacks carbon-carbon bonds, it does not produce particulates in the combustion process. It can be stored at ambient temperatures and can be stored and transported in tanks under pressures similar to those used in the propane industry. DME is also able to provide stored-energy content similar to Liquefied Natural Gas without the need for cryogenic storage.

As new DME fuel systems develop for powering vehicles, so too do the challenges faced by the DME fuel system designers. One such challenge involves the low lubricity of DME and the potential for premature wear on fuel system components, including seals, fuel pumps and injectors. DME has been found to create corrosion issues when used with materials and components converted from diesel-type fuel systems. Another concern in the use of DME involves leak detection; pure DME is colorless, odorless and tasteless.

US 2014/209203 A1 describes a fuel additive cartridge for a vehicle fuel system, comprising a reservoir for a liquid fuel additive, configured to be attached to a fuel fill conduit, and a dispenser opening.

US 5 456 217 A describes a fuel additive cartridge for a vehicle fuel system, with the cartridge being at least partially filled with solid additives and being at least partially permeable to fuel. The cartridge is located in a portion of the filling neck of a fuel tank.

Therefore there is a need for an apparatus and method of using the apparatus to address the foregoing concerns.

According to the invention, a fuel additive cartridge as defined in claim 1 and a dimethyl-ether fuel system as defined in claim 9 are proposed.

The present disclosure describes a device for supplementing fuel-grade dimethyl-ether with additives to increase the usability of DME as a vehicle fuel. Conventional diesel fuel is provided with additives by fuel suppliers as there is a strong infrastructure in place. DME is a new fuel, however, and the infrastructure is lacking. The disclosed method and apparatus would ensure the fuel for the customers meets the necessary specification for operation.

The present disclosure describes a fuel additive cartridge attachable to a DME fuel system of a vehicle to ensure sufficient mixing of fuel grade DME and additives that limit fuel system degradation.

The present disclosure describes a DME fuel system for a vehicle that includes a fuel additive cartridge removably attached to the fueling system upstream of the storage tank to provide a sufficient amount of additive into the DME fuel supply during refueling.

The present disclosure includes a method of mixing DME with fuel additives by using a fuel additive cartridge that releases additive material into a flow of DME during the re-fueling process.

These and other aspects of the present invention will become apparent to those skilled in the art after a reading of the following description of the preferred embodiments, when considered in conjunction with the drawings. It should be understood that both the foregoing general description and the following detailed description are explanatory only and are not restrictive of the invention as claimed.

### Brief Description of the Drawings

The features and advantages of the present invention are well understood by reading the following detailed description in conjunction with the drawings in which like numerals indicated similar elements and in which:
FIG. 1 represents an example vehicle utilizing the embodiments of the present disclosure;
FIG. 2 is a schematic representation of a DME fuel system according to some embodiments of the present disclosure;
FIG. 3 is a cartridge according to a first embodiment of the present disclosure;
FIG. 4 is a cartridge according to a second embodiment of the present disclosure.
FIG. 5 is a cartridge according to a third embodiment of the present disclosure.

### Detailed Description

Exemplary embodiments of this disclosure are described below and illustrated in the accompanying figures, in which like numerals refer to like parts throughout the several views. The embodiments described provide examples and should not be interpreted as limiting the scope of the invention as defined by the appended claims.

The present disclosure provides an apparatus for combining a fuel additive package with oncoming dimethyl-ether (DME), a DME fuel system, and a method of providing additives to dimethyl-ether (DME) fuel systems.

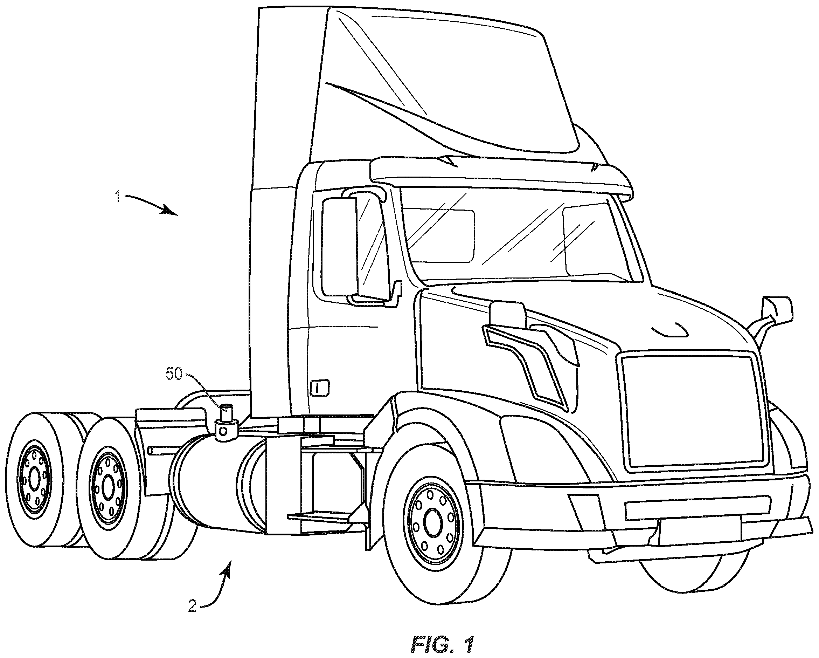

FIG. 1 shows the cab of a tractor truck 1. The tractor truck 1 may be equipped with a DME fuel system 2 that incorporates the disclosed apparatus for providing additives. Particularly, commercial and heavy-duty vehicles may be early adopters of alternative fuels such as DME because the long hours of operation and long distances traveled under heavy loads and under harsh towing conditions generally result in high levels of fuel consumption. Commercial vehicles may also be initial beneficiaries of DME fuel technology because their established routes from pick-up to drop-off may better align with potential regional re-fueling and infrastructure requirements that allow vehicles to come back to the same location to be fueled. That being said, this disclosure is not limited to commercial or industrial vehicle applications such as that shown in FIG. 1.

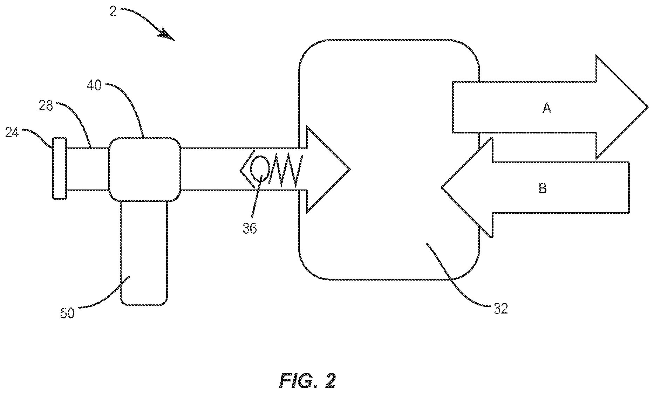

FIG. 2 schematically shows a DME fuel system 2 according to embodiments of the present disclosure. The DME fuel system 2 includes an inlet connector 24. The inlet connector 24 provides a sealable joint for coupling the DME fuel system 2 to an external source of DME (not shown), such as a conduit from a supply reservoir (not shown). The inlet connector 24 may be similar to re-filling connectors used in the propane industry because of similar pressures. However, it should be recognized that propane-type connectors should be designed with DME specific materials to avoid premature degradation of sealing portions. The inlet connector 24 may be positioned in nearly any location based upon the packaging requirements of the larger environment, i.e. the truck. For example, the inlet connector may be integrated with a storage tank 32, positioned adjacent to the storage tank 32, or located remotely from the storage tank 32 so long as fluid communication can be selectively maintained between the inlet connector 24 and the storage tank 32.

A neck 28 may extend from the inlet connector 24 to the storage tank 32. The neck 28 is a supply conduit between the inlet connector 24 and the storage tank 32. The storage tank 32 is configured to house DME under sufficient pressure to maintain the majority of the DME therein in a liquid state. Pressure of approximately 5 bar at 20 degrees C is generally sufficient, which is significantly less than the 240-300 bar holding pressures used with existing compressed natural gas fuel systems. Lower storage pressure has several advantages, including reducing the weight of the storage tank 32 because it does not need to be as strong as an LNG tank. The storage tank 32 should not be completely full of liquefied DME, but should allow headspace for DME held in equilibrium with some portion of the DME in a gaseous state.

As should be understood, additional fuel lines (represented by an arrow A in FIG. 2) should lead to the vehicle's engine to be combusted within the engine to power the vehicle. Other fuel lines (represented by an arrow B in FIG. 2) can be provided from the engine to return unburned fuel to the storage tank 32.

A check valve 36 can be disposed within the neck 28. The stopper valve 36 is a one-way valve that allows pressurized DME to be pumped into the storage tank 32 during the re-fueling process, but prevents DME from the storage tank 32 from being discharged back through the neck 28.

A cartridge 50 containing a fuel additive is connected in fluid communication with the neck 28. The cartridge 50 configured to provide a metered flow of suitable liquid fuel additive into a stream of DME flowing through the neck 28 as the user is re-fueling the DME fuel system 2. The metered flow adds the liquid fuel additive in a controlled manner. The cartridge 50 may be replaceably mounted to the DME fuel system 2 using a joint 40 attached to or integrated with the neck 28. The joint 40 may provide a mechanical, sealed connection with the cartridge 50. The connection between the joint 40 and the cartridge 50 may be a compression attachment similar to how fuel filters are attached to diesel systems.

As mentioned above, fuel additives are desired for the DME fuel system 2 because use of substantially pure dimethyl-ether has low lubricity which may lead to accelerated wear of system components and may corrode standard fuel system components. Use of pure DME is believed likely to be damaging to even specially selected materials. Even if DME-resistant fuel system components could be identified, they may add significant expense relative to conventional fuel lines, tanks, seals and other components.

By incorporating fuel additives at the neck 28 between the inlet connector 24 and the stopper valve 36, a pressure drop as the relatively high pressure new fuel flows into the storage tank 32, having a lower pressure, can draw out the fuel additive from the cartridge 50. Further, the duration that the cartridge 50 is exposed to the pressure drop would be proportional to the amount of fuel additive being mixed into the oncoming DME. Because the fuel additive is included to protect the fuel system components, it is helpful to mix in the fuel additive prior to introduction into the storage tank 32, thereby protecting nearly all of the DME fuel system 2. Further, because the mixing location is upstream of the stopper valve 36, the fuel additive should be combined with the DME only during re-fueling.

Mixing the fuel additive with the DME at a location onboard the vehicle, rather than at a fueling station, may have additional benefits. For example, it is understood to be important that the DME remain properly mixed with the fuel additive and not separate prior to use by the engine. By performing the mixing onboard the vehicle, as compared to premixed DME held within a fueling station, the likelihood that the DME would separate from the additives is reduced because their time between mixing and use is minimized.

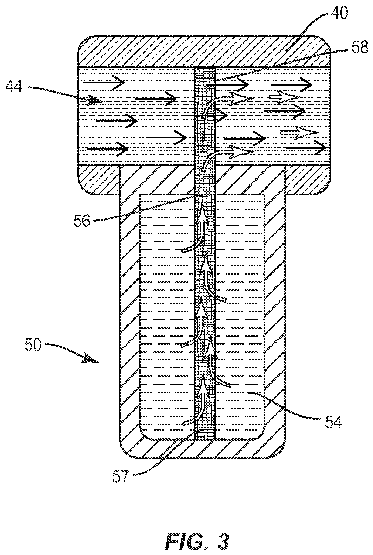

The cartridge 50 provides a reservoir 54 for a liquid fuel additive (see FIGs. 3-5). The liquid fuel additive may be a mixture or composition of one or more ingredients, including but not limited to: a lubricity agent, a cleaner, and an odorant. If multiple ingredients are used, they may be preferably combined into a single reservoir 54 in a single cartridge 50. However, each ingredient could be separately stored within a single cartridge 50 or stored in separate cartridges 50 attached to the same DME fuel system 2. The liquid fuel additive may be petroleum based.

The lubricity agent helps lubricate the flow of DME within the DME fuel system 2. Most compositions of the liquid fuel additive will include at least one lubricity agent. Increased lubrication assists with the prevention of corrosion and seizing of moving parts. Pure DME may not provide a suitable vehicle fuel without a lubricity agent. Examples of lubricity agents reported in the art are castor oil and Lubrizol LZ539N. The liquid fuel additive may also include a clearer to assist with removing deposits or buildup within the DME fuel system 2. The liquid fuel additive may also include an odorant, which may be required by government regulation. Adding a scent to the DME may help a user to identify the presence of a leak of DME from the DME fuel system 2. Odorants may be selected from known odorants commonly associated with gases, to prevent the need to train users about a new association between the odorant and the potential issue with the DME fuel system 2. An example odorant includes ethyl mercaptan, which is used for LPG fuels.

It is important that the liquid fuel additive composition has the proper ratio of ingredients and that the DME is mixed with a sufficient amount of the liquid fuel additive. For example, Hansen and Mikkelsen reported in "DME as a Transportation Fuel" (Danish Road Safety & Transport Agency, July 2001, available at www.traficstyrelsen.dk/en/~/media/738f64ff03a04edea7e8a86e4e0cb6db.pdf) the addition of 1000 ppm Lubrizol LB539N and 20 ppm ethyl mercaptan to DME fuel. Use of other lubricity agents, cleaners or odorants may require adjusting the quantities.

FIG. 3 shows a first embodiment of a cartridge 50. The cartridge 50 includes a reservoir 54 for storing the liquid fuel additive and a wicking media 56. The wicking media has a first end 57 within the reservoir 54 and a second end 58 extending to an exterior of the cartridge 50 and into a flow passage 44 that extends through the joint 40. The wicking media 56 is an example of one possible dispenser used for selectively allowing liquid fuel additive to travel from the reservoir 54 into the flow passage 44. In some embodiments the flow passage 44 may extend through the neck 28 with the joint 40 attached to only a portion of the neck 28. Liquid fuel additive is absorbed by the wicking media 56 and is channeled into the flow passage 44. As DME, most likely in a liquefied state, is forced through the flow passage 44, liquid fuel additive is pulled out of the wicking media 56 and incorporated with the DME flowing through the flow passage 44. The duration of the flow past the wicking media 56 can be approximately proportional to the amount of liquid fuel additive incorporated into the DME. The materials selected for the wicking media 56 and the area of the wicking media 56 that is exposed into the flow passage 44, would therefore be selected for the ability to transfer liquid fuel additive into the DME over the given DME re-fueling flow period. For example, the wicking media 56 may be fabrics made from synthetic materials such as nylon or foams made from compatible plastics such as polypropylene. The flow passage 44 should be sized to allow re-fueling at a rate comparable with current re-fueling rates for diesel fuel. The wicking media 56 surface area will be selected based on the ability of the wicking material to draw the selected additive composition into the fuel flow at the appropriate rate.

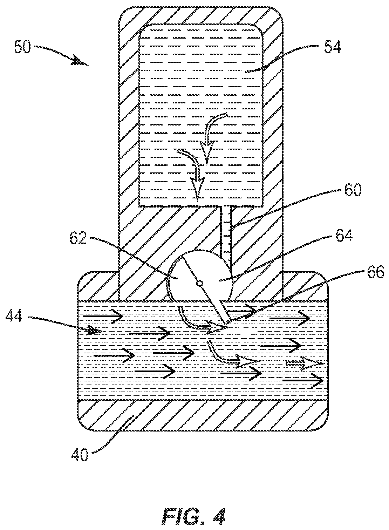

FIG. 4 shows a second embodiment of a cartridge 50 with a second type of dispenser. The cartridge 50 includes a reservoir 54 for storing the liquid fuel additive. The reservoir 54 is connected to a plenum 62 by way of an orifice 60. In the illustrated embodiment, the cartridge 50 would be substantially positioned above the flow passage 44 to allow gravity to feed a metered rate of liquid fuel additive from the reservoir 54 through the orifice 60 into the plenum 62. When there is no DME flow through passage 44, the plenum 62 is closed by a pivotable cover 64. The cover 64 has a lever arm 66 acted on by the DME flow and is biased to the closed position by a spring or similar device. Flow of DME through the flow passage 44 may act on the lever arm 66 to rotate the cover 64 and open the plenum 62 to the flow passage 44. Opening the cover 64 allows the additive in the plenum 62 to flow into the flow passage 44 to mix with the oncoming DME. When in the open position, the cover 64 may block the orifice 60 to prevent unwanted addition of liquid fuel additive. When the flow of DME stops, the cover 64 returns to the closed position. In the closed position of the cover 64, the plenum 62 can be re-filled with liquid fuel additive through the orifice 60. The plenum 62 should accommodate a volume of liquid fuel additive that would be sufficient for an entire tank-full of DME in case the storage tank 32 is nearly empty prior to re-fueling.

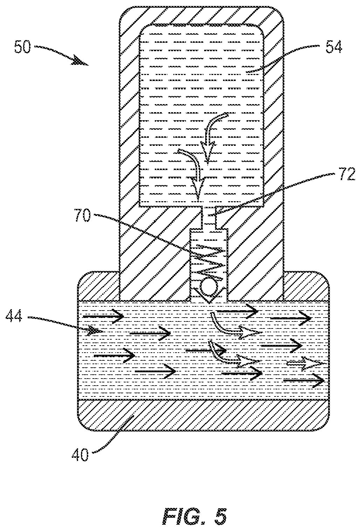

FIG. 5 shows a third embodiment of a cartridge 50 that includes a third type of dispenser, a pressure release valve 70 to selectively allow liquid fuel additive into the flow passage 44. The pressure provided by the oncoming flow of DME would force open the pressure release valve 70. Like the embodiment of FIG. 4, the cartridge 50 illustrated in FIG. 5 may be disposed above the flow passage 44 to allow gravity to force liquid fuel additive into the flow when the pressure release valve 70 is open. The cartridge 50 includes an aperture 72 which should be of such size to provide a desired flow rate of liquid fuel additive into the DME when the pressure release valve 70 is open. Alternatively, a re-fillable plenum may be incorporated into the illustrated embodiment to provide dosed addition of liquid fuel additive. Like the cover 64 of FIG. 4, the pressure release valve 70 may be configured to block flow from the reservoir 54 into an optional plenum when in the open position, and allow flow from the reservoir 54 to the plenum in the closed position.

Several embodiments of cartridges 50 have been described above. Other cartridge embodiments will be apparent to those having skill in the art. Particularly, the cartridges 50 provide for mechanism release of the liquid fuel additive without the use of complex sensors and electronics.

## Claims

1. A fuel additive cartridge (50) for a vehicle fuel system, comprising:
a reservoir (54) for a liquid fuel additive, suitable for use with dimethyl-ether, configured to be attached to a fuel fill conduit; and
a dispenser (56; 62, 64; 70) configured to selectively dispense the liquid fuel additive from the reservoir during fueling when fuel is flowing in the fill conduit.

2. The cartridge of claim 1, wherein the dispenser comprises a wicking media (56), the wicking media has a first end (57) within the reservoir for contact with the liquid fuel additive, and a second end (58) extending exterior of the cartridge for positioning in the fill conduit to dispense the additive.

3. The cartridge of claim 1, wherein the dispenser comprises a cover (64) that is acted on by flowing fuel in the fill conduit to selectively open to allow a fixed amount of liquid fuel additive to exit the cartridge.

4. The cartridge of claim 3, wherein the cover is biased to a closed position.

5. The cartridge of claim 3, wherein the cover includes a lever arm (66) acted on by the flowing fuel for rotating the cover from a closed position to an open position.

6. The cartridge of claim 3, further comprising an orifice (60) leading from the reservoir into a plenum (62), wherein the cover (64) closes the plenum and wherein the volume of the plenum is configured to dose the liquid fuel additive.

7. The cartridge of claim 6, wherein the reservoir is in fluid communication with the plenum, via the orifice, when the cover is closed and the reservoir is not in fluid communication with the plenum when the cover is open.

8. The cartridge of claim 1, wherein the dispenser comprises a pressure release valve (70) controlling flow from the reservoir that opens using filling pressure during re-fueling to allow metered flow of the liquid fuel additive from the reservoir out of the cartridge.

9. A dimethyl-ether fuel system for a vehicle, comprising:
an inlet connector (24) for attachment to an external fuel source during re-fueling;
a neck (28) leading from the inlet connector to a storage tank;
a joint (40) positioned along the neck; and
a cartridge (50), the cartridge comprising a reservoir (54) for storing a liquid fuel additive suitable for use with dimethyl-ether, the cartridge being removably attached to the joint, wherein when attached to the joint, the cartridge is configured to provide selective fluid communication between the reservoir and the neck by action of dimethyl-ether passing through the neck during re-fueling, such that fuel additive is added in a controlled manner to the dimethyl-ether flowing from the inlet connector to the storage tank during re-fueling.

10. A fuel system of claim 9 wherein the cartridge comprises a dispenser (56; 62, 64; 70) configured to selectively dispense the liquid fuel additive from the reservoir.

11. The fuel system of claim 10, wherein the dispenser comprises a wicking media (56), the wicking media has a first end disposed within the reservoir that absorbs the liquid fuel additive, and a second end extending into a flow passage of the neck.

12. The fuel system of claim 10, wherein the dispenser comprises a plenum (62) in fluid communication with the reservoir and a cover (64) that selectively opens to allow an amount of liquid fuel additive contained in the plenum to exit the plenum.

13. The fuel system of claim 12, wherein the cover is spring-biased to a closed position.

14. The fuel system of claim 12, wherein the cover include a lever arm (66) for rotating the cover between an open position and a closed position.

15. The fuel system of claim 12, further comprising an orifice (60) leading from the reservoir to the plenum, wherein the volume of the plenum is configured to dose the liquid fuel additive.

16. The fuel system of claim 10, wherein the dispenser comprises a pressure release valve (70) that opens when pressure is applied to allow flow of the liquid fuel additive from the reservoir out of the cartridge.

## Patentansprüche

1. Kraftstoffadditivpatrone (50) für ein Fahrzeugkraftstoffsystem, umfassend:
einen Vorratsbehälter (54) für ein flüssiges Kraftstoffadditiv, das zur Verwendung mit Dimethylether geeignet ist und so konfiguriert ist, dass es an einer Kraftstofffüllleitung angebracht wird; und
eine Abgabevorrichtung (56; 62, 64; 70), die konfiguriert ist, um das flüssige Kraftstoffadditiv von dem Vorratsbehälter selektiv während des Betankens abzugeben, wenn Kraftstoff in die Füllleitung fließt.

2. Patrone nach Anspruch 1, wobei die Abgabevorrichtung ein Dochtmedium (56) umfasst, wobei das Dochtmedium ein erstes Ende (57) innerhalb des Vorratsbehälters aufweist, das mit dem flüssigen Kraftstoffadditiv in Kontakt ist, und ein zweites Ende, das sich außerhalb der Patrone erstreckt, um die Füllleitung zur Abgabe des Additivs zu positionieren.

3. Patrone nach Anspruch 1, wobei die Abgabevorrichtung eine Abdeckung (64) umfasst, auf welche durch fließenden Kraftstoff in der Füllleitung zur selektiven Öffnung eingewirkt wird, damit eine festgelegte Menge an flüssigem Kraftstoffzusatz aus der Patrone austreten kann.

4. Patrone nach Anspruch 3, wobei die Abdeckung in eine geschlossene Position vorgespannt ist.

5. Patrone nach Anspruch 3, wobei die Abdeckung einen Hebelarm (66) aufweist, auf den der strömende Kraftstoff einwirkt, um die Abdeckung von einer geschlossenen Position in eine offene Position zu drehen.

6. Patrone nach Anspruch 3, die ferner eine Öffnung (60) aufweist, die aus dem Reservoir zu einem Zwischenraum (62) führt, wobei die Abdeckung (64) den Zwischenraum schließt und wobei das Volumen des Zwischenraums so konfiguriert ist, dass das flüssige Kraftstoffadditiv dosiert wird.

7. Patrone nach Anspruch 6, wobei sich der Vorratsbehälter über die Öffnung mit dem Zwischenraum in Fluidverbindung befindet, wenn die Abdeckung geschlossen ist, und sich der Vorratsbehälter nicht in Fluidkommunikation mit dem Zwischenraum befindet, wenn der Deckel geöffnet ist.

8. Patrone nach Anspruch 1, wobei die Abgabevorrichtung ein Überdruckventil (70) umfasst, das den Durchfluss von dem Vorratsbehälter steuert, der sich unter Verwendung von Fülldruck während des Wiederbetankens öffnet, um einen dosierten Durchfluss des flüssigen Kraftstoffadditivs von dem Vorratsbehälter aus der Patrone zu ermöglichen.

9. Dimethylether-Kraftstoffsystem für ein Fahrzeug, umfassend:
einen Einlassanschluss (24) zum Anbringen an einer externen Kraftstoffquelle während des Wiederbetankens;
einen Hals (28), der vom Einlassanschluss zu einem Speichertank führt;
ein Gelenk (40), das entlang des Halses positioniert ist; und
eine Patrone (50), wobei die Patrone einen Vorratsbehälter (54) zur Lagerung eines flüssigen Kraftstoffadditivs umfasst, geeignet zur Verwendung mit Dimethylether, wobei die Patrone entfernbar an der Verbindung befestigt ist, wobei die Patrone, wenn sie an der Verbindung befestigt ist, konfiguriert ist, um eine selektive Fluidverbindung zwischen dem Vorratsbehälter und dem Hals durch die Wirkung von Dimethylether bereitzustellen, der währenddessen während des Wiederbetankens durch den Hals fließt, so dass dem vom Einlassstutzen zum Vorratstank fließenden Dimethylether während des Betankens gezielt Kraftstoffadditiv zugesetzt wird.

10. Kraftstoffsystem nach Anspruch 9, wobei die Patrone eine Abgabevorrichtung (56; 62; 64; 70) umfasst, die zur selektiven Abgabe des flüssigen Kraftstoffadditivs aus dem Behälter konfiguriert ist.

11. Kraftstoffsystem nach Anspruch 10, wobei die Abgabevorrichtung ein Dochtmedium (56) umfasst, wobei das Dochtmedium ein erstes Ende aufweist, das innerhalb des Behälters angeordnet ist, das das flüssige Kraftstoffadditiv absorbiert, und ein zweites Ende, das sich in einen Strömungskanal des Halses erstreckt.

12. Kraftstoffsystem nach Anspruch 10, wobei die Abgabevorrichtung einen Zwischenraum (62) in Fluidverbindung mit dem Vorratsbehälter und einer Abdeckung (64) umfasst, die sich selektiv öffnet, um zu ermöglichen, dass eine Menge an flüssigem Kraftstoffadditiv, die in dem Zwischenraum enthalten ist, den Zwischenraum verlässt.

13. Kraftstoffsystem nach Anspruch 12, wobei die Abdeckung in eine geschlossene Position federvorgespannt ist.

14. Kraftstoffsystem nach Anspruch 12, wobei die Abdeckung eines Hebelarms (66) zum Drehen der Abdeckung zwischen einer offenen Position und einer geschlossenen Position umfasst.

15. Kraftstoffsystem nach Anspruch 12, ferner umfassend eine Öffnung (60), die aus dem Reservoir in den Zwischenraum führt, wobei das Volumen des Zwischenraums zur Dosierung des flüssigen Kraftstoffadditivs konfiguriert ist.

16. Kraftstoffsystem nach Anspruch 10, wobei die Abgabevorrichtung ein Überdruckventil (70) umfasst, das sich öffnet, wenn Druck angewendet wird, um einen Fluss des flüssigen Kraftstoffadditivs von dem Vorratsbehälter aus der Patrone zu ermöglichen.

## Revendications

1. Cartouche d'additif de carburant (50) pour un système d'alimentation en carburant de véhicule, comprenant :
un réservoir (54) pour un additif de carburant liquide, convenant pour l'utilisation avec du diméthyléther, configuré pour être fixé à une conduite de remplissage de carburant ; et
un distributeur (56 ; 62, 64 ; 70) configuré pour distribuer sélectivement l'additif de carburant liquide à partir du réservoir pendant le ravitaillement en carburant lorsque le carburant s'écoule dans la conduite de remplissage.

2. Cartouche selon la revendication 1, dans laquelle le distributeur comprend un support à effet de mèche (56), le support à effet de mèche a une première extrémité (57) à l'intérieur du réservoir pour le contact avec l'additif de carburant liquide, et une deuxième extrémité (58) s'étendant à l'extérieur de la cartouche pour le positionnement dans la conduite de remplissage pour distribuer l'additif.

3. Cartouche selon la revendication 1, dans laquelle le distributeur comprend un couvercle (64) qui est sollicité par du carburant qui s'écoule dans la conduite de remplissage pour s'ouvrir sélectivement pour permettre à une quantité fixe d'additif de carburant liquide de sortir de la cartouche.

4. Cartouche selon la revendication 3, dans laquelle le couvercle est incliné en biais dans une position fermée.

5. Cartouche selon la revendication 3, dans laquelle le couvercle comprend un bras de levier (66) sollicité par le carburant qui s'écoule pour la rotation du couvercle d'une position fermée vers une position ouverte.

6. Cartouche selon la revendication 3, comprenant en outre un orifice (60) allant du réservoir jusque dans une chambre (62), dans laquelle le couvercle (64) ferme la chambre et dans laquelle le volume de la chambre est configuré pour doser l'additif de carburant liquide.

7. Cartouche selon la revendication 6, dans laquelle le réservoir est en communication fluidique avec la chambre via l'orifice lorsque le couvercle est fermé et le réservoir n'est pas en communication fluidique avec la chambre lorsque le couvercle est ouvert.

8. Cartouche selon la revendication 1, dans laquelle le distributeur comprend une soupape régulatrice de pression (70) contrôlant l'écoulement à partir du réservoir qui s'ouvre en utilisant une pression de remplissage pendant un nouveau ravitaillement en carburant pour permettre un écoulement dosé de l'additif de carburant liquide à partir du réservoir hors de la cartouche.

9. Système d'alimentation en carburant de diméthyléther pour un véhicule, comprenant :
un raccord d'entrée (24) pour la fixation à une source de carburant externe pendant un nouveau ravitaillement en carburant ;
un col (28) allant du raccord d'entrée vers un réservoir de stockage ;
une jonction (40) positionnée le long du col ; et
une cartouche (50), la cartouche comprenant un réservoir (54) pour stocker un additif de carburant liquide convenant pour l'utilisation avec du diméthyléther, la cartouche étant fixée de façon amovible à la jonction, dans lequel, lorsque fixée à la jonction, la cartouche est configurée pour fournir une communication fluidique sélective entre le réservoir et le col par l'action du diméthyléther passant à travers le col pendant un nouveau ravitaillement en carburant de sorte que de l'additif de carburant est ajouté d'une manière contrôlée au diméthyléther s'écoulant du raccord d'entrée vers le réservoir de stockage pendant un nouveau ravitaillement en carburant.

10. Système d'alimentation en carburant selon la revendication 9, dans lequel la cartouche comprend un distributeur (56 ; 62, 64 ; 70) configuré pour distribuer sélectivement l'additif de carburant liquide à partir du réservoir.

11. Système d'alimentation en carburant selon la revendication 10, dans lequel le distributeur comprend un support à effet de mèche (56), le support à effet de mèche a une première extrémité disposée à l'intérieur du réservoir qui absorbe l'additif de carburant, et une deuxième extrémité s'étendant à l'intérieur d'un passage d'écoulement du col.

12. Système d'alimentation en carburant selon la revendication 10, dans lequel le distributeur comprend une chambre (62) en communication fluidique avec le réservoir et un couvercle (64) qui s'ouvre sélectivement pour permettre à une quantité d'additif de carburant liquide contenue dans la chambre de sortir de la chambre.

13. Système d'alimentation en carburant selon la revendication 12, dans lequel le couvercle est sollicité par ressort dans une position fermée.

14. Système d'alimentation en carburant selon la revendication 12, dans lequel le couvercle comprend un bras de levier (66) pour la rotation du couvercle entre une position ouverte et une position fermée.

15. Système d'alimentation en carburant selon la revendication 12, comprenant en outre un orifice (60) allant du réservoir vers la chambre, dans lequel le volume de la chambre est configuré pour doser l'additif de carburant liquide.

16. Système d'alimentation en carburant selon la revendication 10, dans lequel le distributeur comprend une soupape régulatrice de pression (70) qui s'ouvre lorsqu'une pression s'exerce pour permettre l'écoulement de l'additif de carburant liquide à partir du réservoir hors de la cartouche.
